# FASCICULE DE BREVET EUROPEEN

(11) **EP 0 448 424 B1**
(45) Date de publication et mention de la délivrance du brevet: **05.06.1996**
(21) Numéro de dépôt: 91400426.2
(22) Date de dépôt: 18.02.1991
(51) Int. Cl.: C08L 95/00, C08J 11/06

(54) **Procédé de production de compositions bitumineuses renfermant des résidus de polymères**
Verfahren zur Herstellung von Polymerrückstände enthaltenden bituminösen Zusammensetzungen
Method of making bituminous compositions containing polymer residues

(30) Priorité: 21.02.1990 FR 9002137
(43) Date de publication de la demande: 25.09.1991
(73) Titulaire: INSTITUT FRANCAIS DU PETROLE, F-92502 Rueil-Malmaison (FR)
(72) Inventeur: Dawans, François, F-78380 Bougival (FR)

(56) Documents cités:
- FR-A- 2 143 085
- GB-A- 1 053 757
- US-A- 4 028 293

## Description

Les polymères sont couramment utilisés comme additifs dans les asphaltes et bitumes routiers ou industriels, soit pour améliorer leurs propriétés de mise en oeuvre en modifiant les propriétés rhéologiques à chaud, soit pour améliorer leurs propriétés physicochimiques (fragilité à froid, tenacité, flexibilité, stabilité, susceptibilité thermique, résistance mécanique, aux chocs, aux vibrations, à l'abrasion...).

En général, les polymères utilisés sont des thermoplastiques (polymères ou copolymères d'oléfines), des caoutchoucs et, en particulier, des élastomères thermoplastiques (copolymères multiséquencés de dioléfines et de styrène), ou, dans une moindre mesure, des résines thermodurcissables (polyuréthanes, époxy, phénol-formol). Selon l'art antérieur, ces polymères peuvent être utilisés seuls ou en mélanges. Par exemple, on a proposé de recycler, comme additifs dans les bitumes, des déchets de fabrication (cires de polyéthylène, polypropylène atactique, alcool polyvinylique, poudrettes de caoutchoucs vulcanisés...) ou des déchets plastiques provenant des ordures ménagères, et plus particulièrement, des emballages plastiques. Dans ce dernier cas, les mélanges de polymères contiennent essentiellement des polyoléfines, du polychlorure de vinyle, du polystyrène et du polyéthylène téréphthalate.

Les polymères sont ajoutés, en petites quantités (en général de 2 à 10 pourcent en poids) dans les bitumes, sous la forme de mélanges "simples" n'impliquant pas d'interaction ou de réaction chimique entre les constituants, ou sous la forme de mélanges "complexes" impliquant une interaction ou une réaction chimique entre le polymère et certains constituants du bitume (asphaltènes, maltènes, résines...), éventuellement en la présence d'un troisième constituant (catalyseur, réactif). Le plus souvent, les polymères sont dispersés à l'état solide ou fondu dans un excès de bitume préalablement chauffé, et, après agitation, les mélanges sont utilisés tels quels, à l'état fondu, ou refroidis à l'état solide, et éventuellement broyés ou granulés. Certains procédés pour la production d'un mélange, à l'état fondu, de bitumes routiers additionnés de polymères d'oléfines, recommandent l'addition d'au moins 5 à 30 pourcent en poids de particules minérales qui accélèrent la dissolution du polymère dans le bitume (voir, par exemple, le brevet US 3336252 publié le 15.8.1967). Le brevet US 4028293 publié le 7.6.1977 revendique la fabrication d'un matériau bitumé, utilisé notamment dans le domaine routier et la construction, et obtenu par réaction à haute température (au moins à 180°C) d'un composé minéral tel que du sable ou des graviers avec un polymère ou un mélange de polymères provenant de déchets domestiques ou ménagers. Le mélange résultant est ensuite ajouté, à chaud, dans du bitume et refroidi. Un inconvénient majeur de cette méthode est le coût final de l'opération qui nécessite un préchauffage à haute température d'une quantité importante de matière minérale avant l'addition du ou des polymère(s).

La présente invention concerne un procédé simplifié et économique pour le recyclage de déchets polymères dans les bitumes routiers ou industriels. Ce procédé convient particulièrement bien pour le recyclage de "stériles d'automobiles", c'est-à-dire des déchets plastiques provenant de la casse des automobiles, pouvant contenir éventuellement d'autres déchets polymères, en proportion mineure, par exemple provenant de la casse d'appareils électroménagers.

Le nom générique de "stériles d'automobiles" ou de "RBA" (résidus ou rebuts du broyage d'automobiles) désigne en fait l'ensemble des matériaux minéraux et organiques issus du broyage ou du déchiquetage en majorité de carcasses d'automobiles et, dans une moindre mesure, d'appareils électroménagers et de déchets industriels, et obtenus après la séparation des principaux matériaux métalliques, par exemple, à l'aide de tris magnétiques, par gravitation ou hydrocyclones, par flottation ou manuels. Ces matériaux métalliques récupérés sont couramment recyclés comme matières premières dans l'industrie métallurgique. Par contre, le recyclage des déchets "stériles" ou non-métalliques pose actuellement un problème majeur à cause de l'hétérogénéité du matériau. Il s'agit, en effet, d'un mélange de composition variable et constitué de particules minérales non-métalliques et de divers polymères.tels que des expansés ou mousses, des caoutchoucs vulcanisés, des fibres synthétiques, des thermoplastiques et des résines thermodurcies.

Compte tenu de la quantité croissante de matériaux polymères employés lors de la construction des véhicules et des appareils électroménagers, il est devenu nécessaire de trouver de nouveaux moyens pour se débarrasser de ces matériaux "stériles", qui soient satisfaisants, à la fois sur le plan économique et sur le plan écologique, pour la protection de l'environnement. On a déjà proposé de faire disparaître la majorité des "stériles d'automobiles" par l'incinération, comme dans le cas des ordures ménagères. Si la construction d'usines spécifiques d'incinération pour les "stériles d'automobiles" est possible au niveau technique, elle ne constitue pas actuellement la solution la plus satisfaisante d'un point de vue énergétique et sur le plan financier, compte tenu des sécurités écologiques a assurer notamment pour le dépoussiérage des fumées de combustion et la rétention des émanations de gaz toxiques ou corrosifs. Comme dans le cas des déchets plastiques provenant des emballages et des ordures ménagères, on a également envisagé le recyclage des "stériles d'automobiles" comme matières premières de seconde génération, utilisées seules ou en mélanges avec des matériaux "neufs" de première génération.
Ainsi, la demande FR-A-2143085 décrit l'élimination et la mise en valeur des déchets de matières plastiques par un traitement incluant un broyage, un lavage, un séchage suivis d'une fusion, d'un mélangeage et éventuellement d'un moulage. Néanmoins, étant donné leur composition plus hétérogène, les emplois des "stériles d'automobiles" comme matériaux recyclés sont restés jusqu'à présent très limités et ils ne permettent pas d'envisager une application suffisamment importante pour se débarrasser de quantités croissantes de "stériles". Par conséquent, la plupart des "stériles d'automobiles" sont actuellement déversés dans des décharges protégées, ce qui implique des coûts de stockage de plus en plus élevés et ce qui constitue, malgré toutes les précautions prises, une solution peu satisfaisante pour la protection de l'environnement.

C'est la raison pour laquelle, l'emploi, selon l'invention, de "stériles d'automobiles" pour améliorer les propriétés des bitumes ou asphaltes routiers et industriels constitue un moyen utile et avantageux de recyclage, du moins si l'on dispose d'une technique simple et fiable pour la réalisation des mélanges. Contrairement aux procédés décrits dans l'art antérieur et limités essentiellement au recyclage de déchets plastiques ménagers dans les bitumes, le procédé amélioré selon la présente invention, permet la mise en oeuvre de mélanges plus hétérogènes et complexes de polymères, tels que les "stériles d'automobiles" ou "RBA".

Le bitume (asphalte) utilisé selon la présente invention est un constituant naturel des huiles minérales et des pétroles bruts; il est obtenu par désasphaltage, par exemple par précipitation au propane, ou par distillation de produits de raffinage (pitch) et/ou de craquage de produits pétroliers. Il peut également être obtenu à partir de goudrons issus du charbon.

Sans sortir du cadre de l'invention, on peut utiliser également un bitume fluxé, par exemple, à l'aide de distillats ou résidus aromatiques ou encore un bitume oxydé ou soufflé à l'air.

La principale originalité de la présente invention consiste à valoriser des mélanges complexes de polymères organiques produits lors du déchiquetage et broyage principalement d'automobiles et, dans une moindre mesure, d'appareils électroménagers et de déchets industriels, en les ajoutant aux liants bitumés ou asphaltiques et en améliorant certaines propriétés en vue notamment d'emplois dans les enrobés de matériaux solides tels que les graviers, les enduits ou les revêtements, en particulier dans le domaine routier, la construction, les travaux publics et les équipements spéciaux.

Le procédé selon l'invention consiste à preparer un mélange bitumineux riche en résidus polymériques et notamment en "stériles d'automobiles", qui peut être ensuite utilisé avantageusement, à l'état dilué, pour améliorer la mise en oeuvre, la stabilité et les propriétés mécaniques de bitumes routiers ou industriels.

L'invention fournit donc un procédé pour l'obtention d'une composition bitumineuse renfermant des résidus polymériques constitués à plus de 80% en poids d'un mélange de polychlorure de vinyle, de polypropylène, de mousse polyuréthane, de polyester et de résine acrylonitrile-butadiène-styrène et plus de 6% en poids de thermoréticulés sélectionnés parmi les résines polyuréthanes, époxy et phénol-formol, seuls ou en mélanges, caractérisé en ce qu'on broie lesdits résidus de manière à les réduire en poudre, on lave à l'eau ladite poudre, on la sèche, on mélange de 95 à 40 parties en poids de la poudre de résidus polymériques broyés, lavés et séchés, avec 5 à 60 parties en poids de bitume pulvérulent, et enfin la composition obtenue représentant au moins 90% du poids de la composition bitumeuse finale est extrudée et granulée, ou agglomérée en briques par compression.

L'invention a également pour objet les compositions bitumeuses obtenues par ce procédé. Le procédé s'adresse plus particulièrement aux mélanges dits "stériles d'automobiles" (ou à des résidus polymériques équivalents) obtenus lors du déchiquetage après la séparation des métaux; ces mélanges contiennent de la terre, quelques fragments métalliques résiduels et divers polymères, tels que définis ci-dessus.

Le broyage, suivi éventuellement d'un tamisage, est réalisé de manière à obtenir une taille de particules inférieure à 10 mm, de préférence comprise entre 2 et 4 m en moyenne. Le mélange pulvérulent est lavé à l'eau à une température de préférence comprise entre 20 et 60°C, pour éliminer la terre, et séché à une température de préférence comprise entre 80 et 120°C, par exemple par passage dans un four rotatif a air pulsé. Sans sortir du cadre de l'invention, on peut profiter de l'étape de lavage à l'eau des "stériles d'automobiles" pour séparer, par exemple, par flottation, les matériaux expansés contenus dans les stériles, tels que les mousses polyuréthanes.

On ajoute ensuite, par exemple dans un mélangeur à poudres, le bitume ou l'asphalte, à l'état solide, préalablement broyé à une température de préférence inférieure à 40°C pour obtenir une taille de particules également inférieure à 10 mm.

Le mélange obtenu est alors extrudé à une température par exemple comprise entre 150 et 250°C et granulé de préférence à la température ambiante correcte de l'extrudeuse et permettant une vitesse d'extrusion élevée. Il peut également être aggloméré en briques à une température comprise de préférence entre 20 et 120°C, par compression, par exemple entre 20 et 50 MPa, la chaleur de compression faisant fondre le bitume. On obtient de cette manière un produit bitumé riche en polymères recyclés, qui peut être aisément stocké, dosé et redissous rapidement dans un excès de bitume fondu lors de sa mise en oeuvre finale.

Les granulats ou les briques bitumineux obtenus peuvent être avantageusement recouverts d'un peu de talc afin d'éviter leur agglomération et leur adhésion durant le stockage. Ils sont ensuite utilisés directement pour la formulation de bitumes routiers ou industriels avant leur mise en oeuvre, de manière à obtenir une teneur en polymères de préférence comprise entre 4 et 20 pourcent en poids par rapport au poids de la composition bitumineuse finale et ils présentent l'avantage de se mélanger rapidement à un excès de bitume fondu.

### Les exemples suivants illustrent l'invention

### EXEMPLE 1

Un mélange brut et humide de stériles provenant directement du déchiquetage d'automobiles et contenant 65 pourcent en poids de divers polymères, 30 pourcent en poids de terre et de résidus minéraux et 5 pourcent en poids d'eau, est traité dans un broyeur humide à couteaux de manière à obtenir des particules de taille comprise entre 2 et 4 mm. Il est ensuite lavé par un courant d'eau à la température ambiante, ce qui permet d'éliminer plus de 95 pourcent en poids de la fraction inorganique. La poudre de polymères obtenue est ensuite essorée et séchée durant 10 minutes par passage dans un four rotatif à air pulsé à 110°C.

D'autre part, du bitume d'origine SAFANIYA est broyé de manière à obtenir une poudre de taille moyenne comprise entre 2 et 4 mm.

Dans un mélangeur à poudres, on introduit 8 kg de poudre de "stériles d'automobiles" et 2 kg de poudre de bitume et le mélange est agité à la température ambiante durant 10 minutes.

Le mélange pulvérulent est extrudé dans une extrudeuse monovis à 210°C et, à la sortie de l'extrudeuse, il est granulé en pastilles sur lesquelles on pulvérise un peu de talc.

Les granulés sont stockés à une température inférieure à 40°C durant 6 semaines. Ils sont ensuite incorporés dans un excès de bitume d'origine SAFANIYA. A cette fin, on chauffe 10 kg de bitume à 200-250°C et l'on y ajoute, sous agitation, en 15 minutes, 4 kg de granulés de la composition bitumineuse concentrée en polymères et l'agitation du mélange fondu est prolongée durant 10 minutes, de manière à obtenir un mélange final homogène et prêt à l'emploi, notamment comme bitume routier pour l'enrobage de graviers.

La viscosité Brookfield mesurée à l'aide d'un viscosimètre à cylindres coaxiaux à 180°C est égale à 3,2. Un essai de flexibilité est réalisé sur un ruban bitumineux de dimensions 2x30x100 mm conditionné durant 1 heure à une température constante et ensuite soumis pendant environ 5 secondes à un pliage autour d'un mandrin de 10 mm de diamètre ; la température de flexibilité, mesurée lors de l'apparition de microcraquelures est voisine de -20°C.

### EXEMPLE 2

Les "stériles d'automobiles" et le bitume SAFANIYA sont broyés comme dans l'exemple 1.

Dans un mélangeur à poudres, on introduit 6 kg de poudre sèche de stériles d'automobiles et 4 kg de poudre de bitume et le mélange est agité à 50°C durant 5 minutes. Il est ensuite introduit dans des moules de dimensions 4x6x16 cm et comprimé à 40 MPa durant 1 minute ; la pression est relachée et, après démoulage, on obtient des briques de composition bitumineuse concentrée en polymères, qui, comme dans l'exemple 1, peuvent être ultérieurement ajoutées à un excès de bitume.

## Revendications

1. Procédé pour l'obtention d'une composition bitumineuse renfermant des résidus polymériques constitués à plus de 80% en poids d'un mélange de polychlorure de vinyle, de polypropylène, de mousse polyuréthane, de polyesters et de résine acrylonitrile-butadiène-styrène et plus de 6% en poids de thermoréticulés, sélectionnés parmi les résines polyuréthanes, époxy et phénol-formol, seuls ou en mélanges, caractérisé en ce qu'on broie lesdits résidus de manière à les réduire en poudre, on lave à l'eau ladite poudre, on la sèche, on mélange de 95 à 40 parties en poids de la poudre de résidus polymériques broyés, lavés et séchés, avec 5 à 60 parties en poids de bitume pulvérulent, et enfin la composition obtenue représentant au moins 90% du poids de la composition butimineuse finale est extrudée et granulée, ou agglomérée en briques par compression.

2. Procédé selon la revendication 1, caractérisé en ce que les résidus polymériques sont en majeure partie des stériles d'automobiles.

3. Procédé selon l'une des revendications 1 et 2, dans lequel les particules de poudre de résidus polymériques et de bitume pulvérulent ont une taille inférieure à 10 mm lors de leur mélange.

4. Procédé selon la revendication 3, dans lequel les particules ont une taille moyenne entre 2 et 4 mm.

5. Procédé selon l'une des revendications précédentes, dans lequel la mise en forme consiste en une extrusion à une température entre 150 et 250°C.

6. Composition bitumineuse renfermant de 5 à 60 parties du poids de bitume et de 95 à 40 parties en poids de résidus polymériques constitués à plus de 80% en poids d'un mélange de polychlorure de vinyle, de polypropylène, de mousse polyuréthane, de polyester et de résine acrylonitrile-butadiène-styrène et plus de 6% en poids de thermoréticulés, sélectionnés parmi les résines polyuréthanes, époxy et phénol-formol, seuls ou en mélanges sous la forme d'extrudats granulés ou de briques agglomérées par compression, obtenue par un procédé selon l'une des revendications 1 à 5.

7. Utilisation d'une composition selon la revendication 6, qui consiste à redissoudre ou disperser ladite compositon dans un excès de bitume fondu, de manière à fournir un bitume pour l'enrobage de graviers ou autres matériaux solides.

## Patentansprüche

1. Verfahren zum Erhalt einer bituminösen Zusammensetzung, die polymere Rückstände enthält, welche aus mehr als 80 Gew.-% einer Mischung von Polyvinylchlorid, von Polypropylen, von Polyurethanschaum, von Polyestern und von Acrylnitril-Butadien-Styrol-Harz und mehr als 6 Gew.-% von wärmevernetzten Stoffen, die aus den Polyurethan-, Epoxi- und Phenol-Formolharzen ausgewählt sind, allein oder in Mischungen gebildet sind, dadurch gekennzeichnet, daß man die Rückstände zerkleinert, derart, um sie auf Pulver zu reduzieren, man das Pulver mit Wasser wäscht, man es trocknet, man von 95 bis 40 Gewichtsteile des Pulvers zerkleinerter, gewaschener und getrockneter polymerer Rückstände mit von 5 bis 60 Gewichtsteilen feinpulverigem Bitumen mischt und man schließlich die erhaltene Zusammensetzung, die wenigstens 90 Gew.-% der bituminösen Endzusammensetzung darstellt, extrudiert und granuliert oder durch Verdichtung in Briketts formt.

2. Verfahren nach Anspruch 1, dadurch gekennzeichnet, daß die polymeren Rückstände zum größeren Teil Abraum von Automobilen sind.

3. Verfahren nach einem der Ansprüche 1 und 2, bei welchem die Pulverpartikel der polymeren Rückstände und des feinpulverigen Bitumens eine Größe kleiner als 10 mm während deren Mischung aufweisen.

4. Verfahren nach Anspruch 3, bei welchem die Partikel eine mittlere Größe zwischen 2 und 4 mm aufweisen.

5. Verfahren nach einem der vorhergehenden Ansprüche, bei welchem die Informbringung in einem Extrudieren bei einer Temperatur zwischen 150 und 250°C besteht.

6. Bituminöse Zusammensetzung, die 5 bis 60 Gewichtsteile Bitumen und 95 bis 40 Gewichtsteile polymere Rückstände enthält, welche aus mehr als 80 Gew.-% einer Mischung von Polyvinylchlorid, von Polypropylen, von Polyurethanschaum, von Polyester und von Acrylnitril-Butadien-Styrol-Harz und mehr als 6 Gew.-% von wärmevernetzten Stoffen, die aus den Polyurethan-, Epoxi- und Phenol-Formolharzen ausgewählt sind, allein oder in Mischungen gebildet sind, in der Form von granulierten Extrudaten oder von durch Verdichtung agglomerierten Briketts, durch ein Verfahren nach einem der Ansprüche 1 bis 5 erhalten.

7. Verwendung einer Zusammensetzung nach Anspruch 6, die darin besteht, die Zusammensetzung in einem Überschuß von geschmolzenen Bitumen wiederaufzulösen oder zu dispergieren, derart, um ein Bitumen für die Einbettung von Kiessanden oder anderen festen Materialien vorzusehen.

## Claims

1. A process for obtaining a bituminous composition containing waste polymers consisting of more than 80 % by weight of a mixture of polyvinylchloride, polypropylene, polyurethane foam, polyesters and acrylonitrilc- butadiene- styrene resin and more than 6 % by weight of thermally cross-linked materials, selected from polyurethane, epoxy and phenol - formaldehyde resins, alone or mixed, characterized in that said waste polymers are ground in such a way as to reduce them to powder, the powder is washed with water and dried, 95 to 40 parts by weight of the ground waste polymer powder in washed and dried form are mixed with 5 to 60 parts by weight of pulverulent bitumen and finally the composition obtained representing at least 90 % of the weight of the final bituminous composition is extruded and granulated, or agglomerated into bricks by compression.

2. Process according to claim 1, characterized in that the waste polymers are predominantly sterile car waste materials.

3. Process according to any one of the claims 1 and 2, wherein the powder particles of the waste polymers and pulverulent bitumen have a size below 10 mm during mixing.

4. Process according to claim 3, wherein the particles have an average size between 2 and 4 mm.

5. Process according to any one of the preceding claims, wherein the shaping is conducted by extrusion at a temperature between 150 and 250°C.

6. Bituminous composition containing waste polymers consisting of more than 80 % by weight of a mixture of polyvinylchloride, polypropylene, polyurethane foam, polyesters and acrylonitrilc-butadiene- styrene resin and more than 6 % by weight of thermally cross-linked materials, selected from polyurethane, epoxy and phenol - formaldehyde resins, alone or mixed, characterized in that said waste polymers are ground in such a way as to reduce them to powder, the powder is washed with water and dried, 95 to 40 parts by weight of the ground waste polymer powder in washed and dried form are mixed with 5 to 60 parts by weight of pulverulent bitumen and finally the composition obtained representing at least 90 % of the weight of the final bituminous composition is extruded and granulated, or agglomerated into bricks by compression.

7. Use of a composition according to claim 6, which consists of redissolving or dispersing the said composition in a melted bitumen excess, so as to supply a bitumen for the coating of gravel or other solid materials.
